# EUROPEAN PATENT APPLICATION

(11) **EP 3 904 151 A1**
(43) Date of publication of application: **03.11.2021**
(21) Application number: 20172515.7
(22) Date of filing: 30.04.2020
(51) Int. Cl.: B60L 55/00, H02J 3/00

(54) **POWER SUPPLY SYSTEM FOR BIDIRECTIONAL ENERGY FLOW**

(71) Applicant: ABB Schweiz AG, 5400 Baden (CH)
(72) Inventor: DROFENIK, Uwe, 8053 Zürich (CH); GRADINGER, Thomas, 5032 Aarau Rohr (CH); CANALES, Francisco, 5405 Baden-Dättwil (CH); ORTIZ, Gabriel, 8005 Zürich (CH); PARK, Ki-Bum, Daejeon 34141 (KR); ROTHMUND, Daniel, 5243 Mülligen (CH); COSTA, Levy, 5430 Wettingen, Aargau (CH)
(74) Representative: Maiwald Patent- und Rechtsanwaltsgesellschaft mbH

(57) **Abstract**

The invention relates to a power supply system (10), particularly for a bidirectional energy flow between a medium-voltage grid (11) and a low-voltage electricity consumer site (60). The system (10) comprises a power feeding system (25), configured for transforming an AC medium-voltage power signal from the medium-voltage grid (11) into a low-voltage power signal (29) for feeding the electricity consumer site (60). Furthermore, it comprises a low-voltage multiphase converter (40), configured for transforming a low-voltage signal (41, 42) into a low-voltage multiphase signal (49), wherein the multiphase converter (40) is arranged antiparallel to the power feeding system (25); and an LV/MV multiphase transformer (50), configured for transforming the low-voltage multiphase signal (49) into an output-signal (59) that is conformant to the AC medium-voltage power signal (11).

## Description

### Field of the Invention

The invention relates to the field of power supplies, particularly for a bidirectional energy flow between a medium-voltage grid and a low-voltage electricity consumer site, e.g. for electric vehicles. The invention further relates to a method and to a use of a power supply.

### Background

Power supplies, e.g. for charging systems for electric vehicles (EV) and other low-voltage (LV) electricity consumer sites, require high power levels. Therefore, in many cases a medium-voltage grid (MV grid) is used as a base for the power supplies. Additionally, for many systems legal conditions and/or further requirements for MV grid standards need to be fulfilled. Furthermore, in some cases there is a request for feeding energy sources like solar panels and other sources, which are available at the LV side of the charging station, into the MV grid. Thus, at least partly bidirectional power flow these power supplies needs to be supported. This may result in bulky frontends for the system that feeds the charging pole.

### Description

It is therefore an objective of the invention to provide an improved power supply for a low-voltage electricity consumer site, e.g. for electric vehicles. This objective is achieved by the subject-matter of the independent claims. Further embodiments are evident from the dependent patent claims and the following description.

One aspect relates to a power supply system for a bidirectional energy flow between a medium-voltage grid and a low-voltage electricity consumer site. The power supply system comprises a power feeding system, configured for transforming an AC medium-voltage power signal from the medium-voltage grid into a low-voltage power signal for feeding the electricity consumer site. Furthermore, the power supply system comprises a low-voltage multiphase converter, configured for transforming a second low-voltage signal, which is based on a first low-voltage signal from the electricity consumer site, into a low-voltage multiphase signal, wherein the multiphase converter is arranged antiparallel to the power feeding system; and an LV/MV multiphase transformer, configured for transforming the low-voltage multiphase signal into an output-signal that is conformant to the AC medium-voltage power signal.

The bidirectional energy flow is to support energy transfer both from a medium-voltage (MV) source to a low-voltage (LV) sink and from a LV source to a MV sink. The energy flow of the energy may be unsymmetrical, e.g. with lower - possibly with significantly lower - energy flow from the LV source to the MV sink than from the MV source to the LV sink. The MV source and sink may be an MV grid, e.g. with a frequency of 50 Hz or 60 Hz and voltages of about 10 kV to 30 kV. The LV source and sink may be a bidirectional low-voltage electricity consumer site, for instance a charging systems for EVs that is configured to feed energy sources like batteries, solar panels and other sources, which are available at the low-voltage electricity consumer site, to the MV site, e.g. into the MV grid. In some cases, the batteries at the LV site may be employed for grid stabilization.

The power feeding system uses the MV source and delivers an LV DC voltage or an LV AC voltage, possibly an LV HF-AC (high-frequency alternating current) voltage with frequencies of about 5 kHz - 100 kHz. The low-voltage power signal at the LV consumer site may be fixed, and have a voltage in a range from about 400 V to 1000 V, or about 230 V, or about 110 V. The LV consumer site may comprise further modules, e.g. for transforming the LV signal into standardized signals for EV stations, possibly into a variable and/or controlled voltage.

The type of the low-voltage multiphase converter, from the LV power source, depends on the type of signal delivered from the LV power source. The LV power source may be, for instance, a battery that delivers, as the first low-voltage signal, a DC voltage, which is, as the second low-voltage signal, fed directly into the input of the multiphase converter. The LV power source may be, as another example, an HF-AC as the first low-voltage signal and may be transformed by an AC/DC-converter into a DC signal as the second low-voltage signal. The LV power source may be, additionally or alternatively, any kind of excess energy, which the system allows to feed it back to the MV grid.

The multiphase converter may generate, e.g., a 3 phases 50 Hz signal. This signal may depend on the type of signal in the MV grid. The multiphase converter may further act as active filter, thus allowing in a flexible way to fulfil the MV grid standard. The LV/MV multiphase transformer may transform the low-voltage multiphase signal into an output-signal that is conformant to the AC medium-voltage power signal. The conformance may be established by the combination of the multiphase converter and the LV/MV multiphase transformer. Conformant may mean, for instance, that is has the same phase as the MV grid, and fulfils further MV grid requirements, for example w.r.t. current harmonic limits and/or further requirements, e.g. determined by IEEE 519 and/or by IEC 61000-3-6.

Consequently, the features of the power supply system advantageously lead to a system that masters bidirectional power flow with low distortion. The clear concept further leads to a high flexible system, e.g. w.r.t. to the number of LV sources. Moreover, the system components are of small size - e.g. compared to a conventional 50 Hz transformer - and/or the system has low manufacturing and/or maintenance costs.

In various embodiments, the power feeding system comprises a Line Interphase Transformer (LIT). The power feeding system may be implemented as a LIT-based rectifier. The LIT may be a multi-pulse LIT with a pulse number of 12, of 18, of 24, or of higher than 24. Accordingly, due to the multi-pulse LIT the harmonics of the passive main rectifier may be quite small. Furthermore, the active filter may be designed for just a fraction of the power of the full station. This may contribute to use a 50 Hz transformer of the active filter, which is quite small, and may lead to reduced cost and/or to small no-load losses.

In various embodiments, the low-voltage multiphase converter is an active filter that injects current, based on the signal of the MV grid. Particularly, the multiphase converter injects current, which reduces current harmonics greater or equal two in the MV grid. This advantageously not only contributes to a distortion compensation of the current fed in "backward direction" to the MV grid, but may even contributes to a distortion compensation of the complete power supply system, thus further improving its conformance to the AC medium-voltage power signal.

In various embodiments, the system further comprises a first inductor that is arranged between the AC medium-voltage power signal and the power feeding system, and is arranged between the AC medium-voltage power signal and the LV/MV multiphase transformer. Thus, the inductor, which connects MV grid and, e.g., the LIT-based rectifier, is designed to reduce the distortion factor and/or the current harmonics, which may affect the MV grid. In at least some countries, this may be a legal and/or a standard requirement, e.g. to comply with relevant MV grid standards, e.g. with IEEE 519 or IEC 61000-3-6. Advantageously, said requirements may be fulfilled without complex and expensive active frontends to the MV grid, thus leading to a simpler design, lower manufacturing-cost, and/or reducing maintenance efforts.

In various embodiments, the LV multiphase DC/AC-converter comprises a multiphase switching subsystem and a second inductor, which is arranged between the multiphase switching subsystem and the LV/MV multiphase transformer. The second inductor may be integrated into the LV/MV multiphase transformer. This arrangement may contribute to further reduce the distortion factor that is forwarded to the MV grid.

In various embodiments, the power supply system further comprising a converter, which is configured for transforming the first low-voltage signal from the electricity consumer site (60), into the DC low-voltage signal. The converter may be a DC/AC-converter, an AC/AC-converter, and/or an AC/DC-converter with a DC/AC-converter. The type of the converter may depend on the LV power source, e.g. if the power source is a DC source, or an AC source, and/or the frequency of the AC source. Thus, the converter may adapt the voltage and/or the frequency of the LV power source to the input of the low-voltage multiphase DC/AC-converter. This advantageously allows the use of broad variety of LV sources for feeding back their energy.

An aspect relates to a method for supporting a bidirectional energy flow between a medium-voltage grid and a low-voltage electricity consumer site. The method comprise the steps:
transforming, by means of a power feeding system, an AC medium-voltage power signal from the medium-voltage grid into a low-voltage power signal for the electricity consumer site;
outputting, from the electricity consumer site, a first low-voltage signal;
feeding a second low-voltage signal, which is based on the first low-voltage signal, into a low-voltage multiphase DC/AC-converter, which is arranged antiparallel to the power feeding system;
forwarding a low-voltage multiphase signal from the output of the low-voltage multiphase DC/AC-converter to an LV/MV multiphase transformer; and
transforming, by means of the LV/MV multiphase transformer, the low-voltage multiphase output signal into an output-signal that is conformant to the AC medium-voltage power signal.

In various embodiments, the power feeding system comprises a Line Interphase Transformer, LIT. The LIT may be a multi-pulse LIT with a pulse number of 12, of 18, of 24, or of higher than 24.

In various embodiments, the conversion of the DC medium-voltage power signal to the low-voltage power signal for the electricity consumer site is achieved by a modular DC/DC converter with large step-down gain and medium frequency transformers for galvanic insulation.

In various embodiments, the method further comprises the step of filtering, by means of a first inductor, the AC medium-voltage power signal from the power feeding system, and the AC medium-voltage power signal from the LV/MV multiphase transformer.

An aspect relates to a bidirectional power supply system described above and/or below for delivering energy from a medium-voltage grid to a low-voltage electricity consumer site and from the low-voltage electricity consumer site to the medium-voltage grid.

An aspect relates to a use of a bidirectional power supply system as described above and/or below for delivering energy from a medium-voltage grid to a low-voltage electricity consumer site (LV site) and from the LV site to the medium-voltage grid. The low-voltage electricity consumer site may be a charging box and/or a charging pole for charging electric vehicles, a data-centre, and/or a plurality of low-voltage drives, and is configured to deliver energy from batteries, from a solar panel, and/or from other energy producing devices. As a further example, a manufacturing site with electricity consumers, e.g. electric motors, and a plurality of solar panels, e.g. installed on the roof, may be the LV site.

For further clarification, the invention is described by means of embodiments shown in the figures. These embodiments are to be considered as examples only, but not as limiting.

### Brief Description of the Drawings

The figures depict:
- **Fig. 1a, 1b, 1c**: schematically various designs of a part of a power supply system according to embodiments;
- **Fig. 2a, 2b**: schematically various designs of a part of a power supply system according further embodiments;
- **Fig. 3**: schematically a power supply system according to an embodiment;

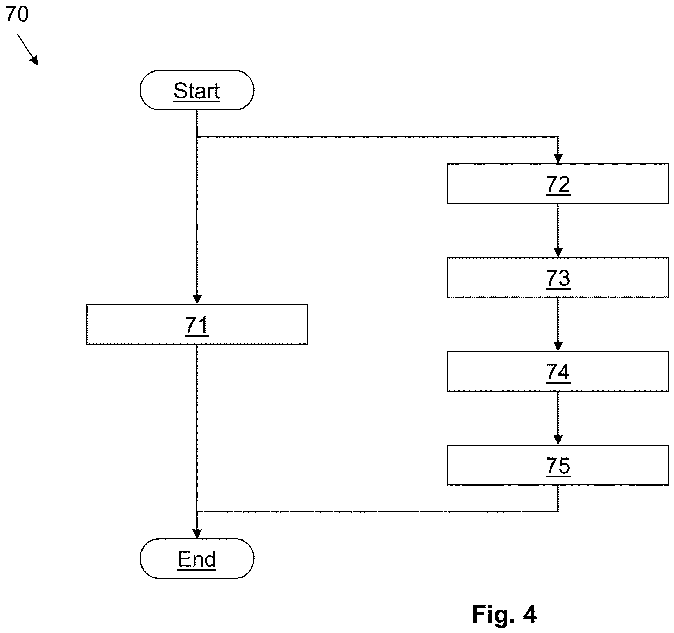

- **Fig. 4**: schematically a method according to an embodiment;
- **Fig. 5**: schematically an example of the system of **Fig. 3****;**
- **Fig. 6**: schematically a further example of the system of **Fig. 3****;**
- **Fig. 7**: schematically a further example of the system of **Fig. 3****;**
- **Fig. 8**: schematically a simulation example analogously to **Fig. 5****;**
- **Fig. 9a** - **9e**: schematically simulations of an MV grid behaviour of a power supply system according to an embodiment.

### Detailed Description of Embodiments

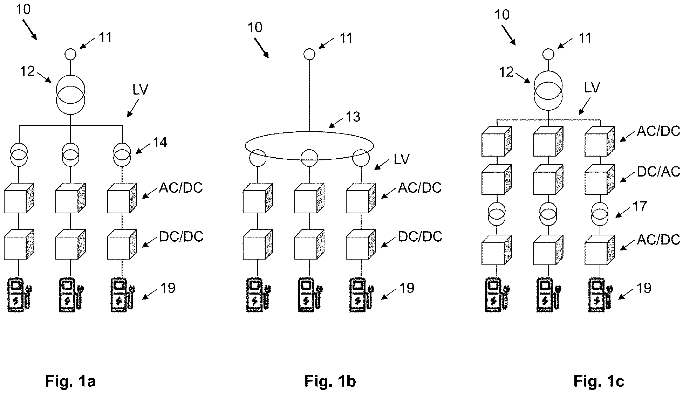

**Fig. 1a** shows a power supply system 10 with a 50 Hz MV/LV-transformer 12 for an insulation to an MV grid or AC medium-voltage power signal 11. The 50 Hz low-voltage signal is transformed by a 50 Hz LV/LV-transformer 14. The LV/LV-transformers 14 separate galvanically the plurality of charging poles 19 from each other. The two conversion stages of low-frequency transformers may result in a large system w.r.t. footprint and size. Between each one of the LV/LV-transformers 14 and the respective charging poles 19, an AC/DC-transformer and a DC/DC-transformer is arranged. **Fig. 1b** shows a power supply system 10 with a multi-winding 50 Hz transformer 13. This is a system with one conversion stage, thus both transforming MV to LV and providing of the plurality of charging poles 19 from each other. **Fig. 1c** shows a power supply system 10 with a first conversion stage of a 50 Hz MV/LV-transformer 12. As a second conversion stage, the system 10 has a low voltage Medium-Frequency Transformer, LV/LV-MFT 17, whose higher frequency is provided by a DC/AC-transformer.

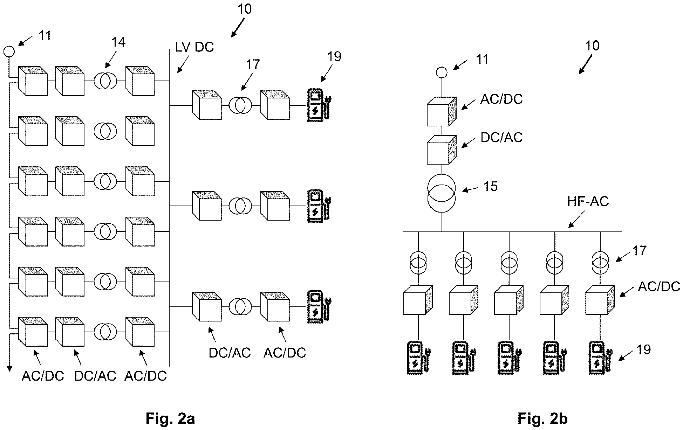

**Fig. 2a** shows a power supply system 10 with MV-MFTs 14 for a galvanic separation to the MV grid 11. Furthermore, it has LV/LV-MFTs 17 for a galvanic separation of the charging poles 19 from each other.

**Fig. 2b** shows a power supply system 10 with a first conversion stage, an MV/LV-MFT 15, which is supplied by an MV-DC/AC converter for a high frequency, HF-AC. The second conversion stage are LV/LV-MFTs 17 for a galvanic separation of the charging poles 19 from each other.

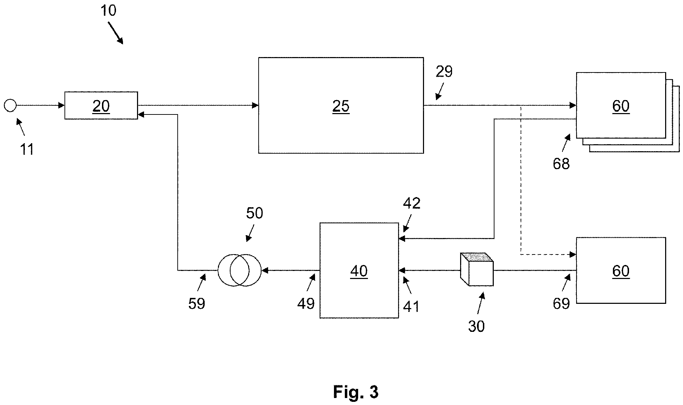

**Fig. 3** shows a schematic overview over a power supply system 10. The power supply system 10 has in its "forward branch" a power feeding system 25. The power feeding system 25 is configured for transforming an AC medium-voltage power signal from the medium-voltage grid (MV grid) 11 into a low-voltage power signal (LV signal) 29. The LV signal 29 may feed a plurality of electricity consumer sites (LV sites) 60. The LV sites may have further modules, e.g. for controlling and/or distributing the power. Examples may comprise charging systems for electric vehicles. At least some of the LV sites 60 may have a bidirectional energy flow, i.e. some LV sites may be configured to deliver energy in forward direction, some LV sites in backward direction, and/or some LV sites in both directions.

In the "backward branch", i.e. arranged antiparallel to the power feeding system 25, the power supply system 10 has a low-voltage multiphase DC/AC-converter 40. The low-voltage multiphase DC/AC-converter 40 is configured for transforming a second DC low-voltage signal 41, 42, which is based on a first low-voltage signal 68, 69 from the electricity consumer site 60, into a low-voltage multiphase signal 49. The multiphase converter 40 may be connected directly to one or more of the LV sites 60, for example in cases when the LV site 60 delivers a DC power signal as a first low-voltage signal 68, 69. The multiphase converter 40 may be connected via a converter 30 to one or more of the LV sites 60. The converter 30 may be configured for transforming the first low-voltage signal 68, 69 from the electricity consumer site 60, into the DC low-voltage signal 41, 42. The converter 30 is a DC/AC-converter, an AC/AC-converter, and/or an AC/DC-converter with a DC/AC-converter. This may depend on the type of the first low-voltage signal 68, 69 delivered the electricity consumer site 60. The converter 30 may be integrated with the multiphase converter 40, e.g. as a hardware part of it. The converter 30 may be a separate part or integrated with one or more of the LV sites 60. The multiphase converter 40 may deliver a signal of, for instance, 3 phases on its output 49. The low-voltage multiphase signal 49 is forwarded to an LV/MV multiphase transformer 50. The LV/MV multiphase transformer 50 transforms the LV multiphase signal 49 into an MV output-signal 59 that is conformant to the AC medium-voltage power signal of the MV grid 11. Conformant may mean, for instance, that is has the same phase as the MV grid, and fulfils further MV grid requirements, for example w.r.t. current harmonic limits and/or further requirements, e.g. determined by IEEE 519 and/or by IEC 61000-3-6.

**Fig**. **4** shows schematically a flowchart 70 of a method according to an embodiment. The flowchart 70 depicts a method for supporting a bidirectional energy flow between a medium-voltage grid 11 (see, e.g., **Fig. 3**) and a low-voltage electricity consumer site 60. In a step 71, an AC medium-voltage power signal 11 from the medium-voltage grid is transformed, by means of a power feeding system 25, into a low-voltage power signal 29 for the electricity consumer site 60. In a step 72, a first low-voltage signal 68, 69 is output, from the electricity consumer site 60. In a step 73, a second low-voltage signal 41, 42, which is based on the first low-voltage signal 68, 69, is fed into a low-voltage multiphase DC/AC-converter 40, which is arranged antiparallel to the power feeding system 25. In a step 74, a low-voltage multiphase signal 49 from the output of the low-voltage multiphase DC/AC-converter 40 is forwarded to an LV/MV multiphase transformer 50. In a step 75, the low-voltage multiphase output signal 49 is transformed, by means of the LV/MV multiphase transformer 50, into an output-signal 59 that is conformant to the AC medium-voltage power signal 11. The steps 72 to 75 may be performed in parallel to step 71.

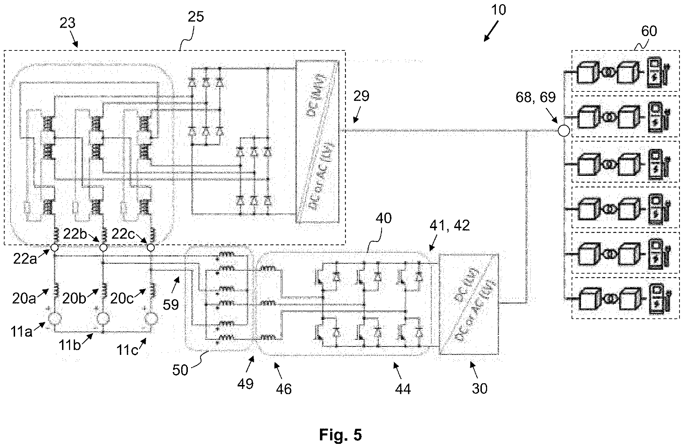

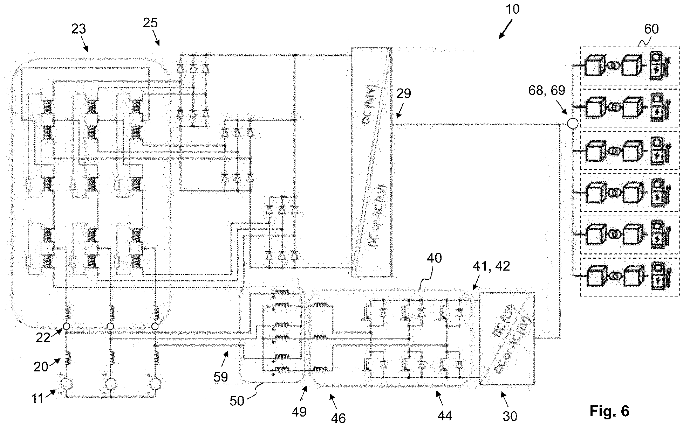

**Fig. 5** shows schematically an example of the system of **Fig. 3****.** This embodiment of a power supply system 10 comprises a LIT-based rectifier 25 with a 12-pulse LIT 23. Each input 22a, 22b, 22c of the LIT 23 is connected via inductors 20a, 20b, 20c to each phase 11a, 11b, 11c of the MV grid 11. The LIT-based rectifier 25 produces a LV power signal 29 for feeding the plurality of electricity consumer sites 60. The LIT-based rectifier's first component is a 12-pulse LIT (Line Interphase Transformer) 32, whose outputs 35 are fed to a multi-pulse diode rectifier 37. The LIT shown in **Fig. 5** (and, analogously, in **Fig. 6**) depicts the magnetic cores, which couple the inductive components of the LIT, as lines coupled by a magnetic reluctance (a small rectangular box as equivalent circuit diagram).

In the "backward direction", at least some of the LV sites 60 may deliver a first LV power signal 68, 69 of different type, i.e. possibly of different and/or of variable voltage, of DC and/or of AC of different frequency, possibly of 50 Hz, 60 Hz, in a range of about 5 kHz - 20 kHz, and/or other frequencies, with fixed or variable frequency. Depending on the type of LV source, a converter 30 is arranged in the "backward branch" of the power supply system 10. The converter 30 feeds a second DC low-voltage signal 41, 42 to the LV multiphase DC/AC-converter 40. The multiphase converter 40 produces a low-voltage multiphase signal 49, which is fed into a LV/MV multiphase transformer 50. The multiphase converter 40 comprises a multiphase switching subsystem 44 and a second inductor 46. The second inductor 46 is arranged between the multiphase switching subsystem 44 and the LV/MV multiphase transformer 50. Alternatively, the second inductor 46 may be part of the LV/MV multiphase transformer 50. The LV/MV multiphase transformer 50 transforms the low-voltage multiphase signal 49 into an output-signal 59, and feeds the output-signal 59 to the MV grid 11, via inductors 20a, 20b, 20c for each phase of the output-signal 59 and the MV grid 11. The output-signal 59 that is conformant to the AC medium-voltage power signal 11 and, additionally, its distortion factor is further reduced by the inductors 20a, 20b, 20c. The inductivity of the inductors 20a, 20b, 20c may be quite small; an example could be around 34 mH for the shown embodiment with a 12-pulse LIT.

**Fig. 6** shows schematically a further example of the system of **Fig. 3****.** This embodiment of a power supply system 10 comprises a LIT-based rectifier 25 with an 18-pulse LIT 23. The higher number of pulses may advantageously lead to a smaller distortion factor and, thus, to further reduced inductors 20a, 20b, 20c. In further aspects, the embodiment of **Fig. 6** is quite similar to the one of **Fig. 5****.** Particularly, the same reference signs indicate the same or similar components.

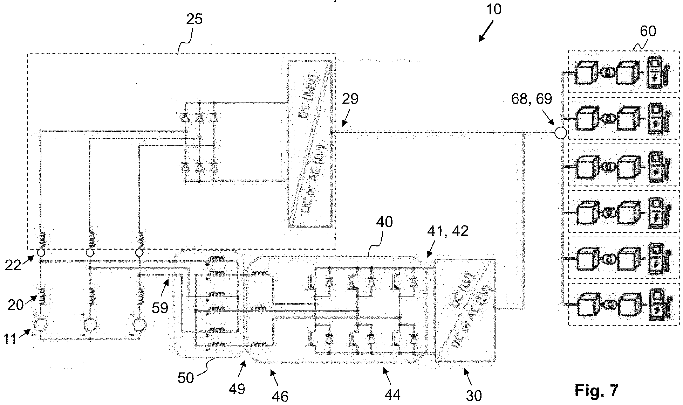

**Fig. 7** shows schematically a further example of the system of **Fig. 3****.** This embodiment of a power supply system 10 comprises a simple diode bridge in the power feeding system 25. In further aspects, the embodiment of **Fig. 6** is quite similar to the one of **Fig. 5**. Particularly, the same reference signs indicate the same or similar components.

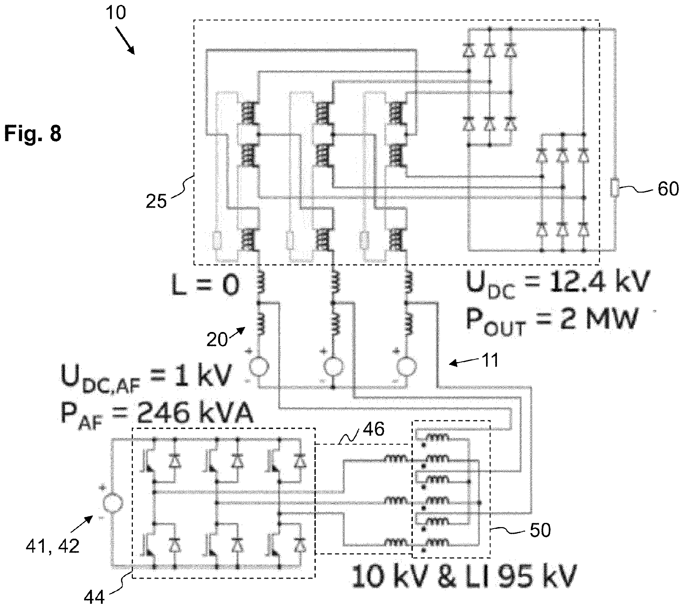

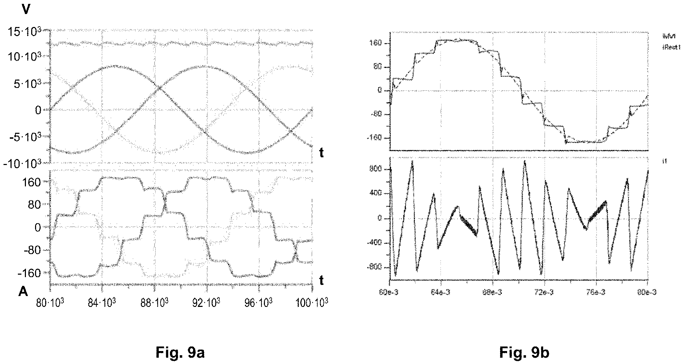

**Fig. 8** shows schematically a simulation example of a power supply system 10, analogously to **Fig. 5**. The power feeding system 25 delivers a max. power of 2 MW to the plurality of LV sites 60, with a voltage of U_{DC} = 12.4 kV. The LV sites 60 deliver a power of 246 kVA, with a voltage of U_{DC,AF} = 1 kV. The LV/MV multiphase transformer 50 transforms this to a voltage of 10 kV. Simulation results are shown in **Fig. 9a** to **9d****.**

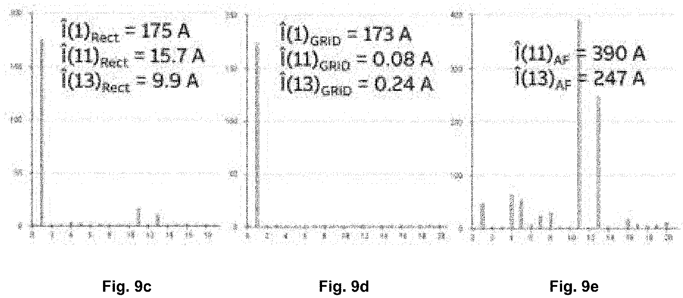

**Fig. 9a** shows simulated waveforms of the MV grid voltages (above) and the 12-pulse input current of the LIT-based rectifier (below), with a rectified current of I = 124 A. **Fig. 9b** shows the effect of the active filter 40 arranged in the "backward branch". In the diagram above, the straight curve shows a LIT-based rectifier input current. In the diagram below, the curve shows a "corrective" current injected by the active filter. The effect can be seen in the broken-line curve in the above diagram: The broken-line curve shows a very smooth curve with low distortion. This is also visible in the diagrams of **Fig. 9c** to **9e. Fig. 9c** shows the 11^{th} and the 13^{th} current harmonics produced by the LIT-based rectifier 25 of **Fig. 8****.** **Fig. 9d** shows the result of injecting current by the active filter. It is clearly visible that the distortion energy is significantly reduced. **Fig. 9e** shows, how in this example the injected current may look like.

### Reference Signs

- 10: power supply system
- 11: medium-voltage grid / MV grid
- 11a, 11b, 11c: phases of the MV grid
- 12: MV/LV-transformer
- 13: transformer
- 14: LV/LV-transformer
- 15: MV/LV-MFT
- 17: LV/LV-MFT
- 19: charging poles
- 20: first inductors 20a, 20b, 20c
- 22a, 22b, 22c: inputs of the LIT
- 23: Line Interphase Transformer, LIT
- 25: LIT-based rectifier
- 29: LV power signal
- 30: converter
- 40: multiphase DC/AC-converter
- 41, 42: low-voltage signal
- 44: switching subsystem
- 46: second inductor
- 49: multiphase output signal
- 50: multiphase transformer
- 59: MV output-signal
- 60: low-voltage site, LV site
- 68, 69: low-voltage power signal
- 70: flowchart
- 71 - 75: steps

## Claims

1. A power supply system (10) for a bidirectional energy flow between a medium-voltage grid (11) and a low-voltage electricity consumer site (60), the system (10) comprising:
a power feeding system (25), configured for transforming an AC medium-voltage power signal from the medium-voltage grid (11) into a low-voltage power signal (29) for feeding the electricity consumer site (60);
a low-voltage multiphase converter (40), configured for transforming a second low-voltage signal (41, 42), which is based on a first low-voltage signal (68, 69) from the electricity consumer site (60), into a low-voltage multiphase signal (49), wherein the multiphase converter (40) is arranged antiparallel to the power feeding system (25); and
an LV/MV multiphase transformer (50), configured for transforming the low-voltage multiphase signal (49) into an output-signal (59) that is conformant to the AC medium-voltage power signal (11).

2. The power supply system (10) of claim 1,
wherein the power feeding system (25) comprises a Line Interphase Transformer, LIT.

3. The power supply system (10) of claim 2,
wherein the LIT is a multi-pulse LIT with a pulse number of 12, of 18, of 24, or of higher than 24.

4. The power supply system (10) of any one of the preceding claims,
where the low-voltage multiphase converter (40) is an active filter that injects current, based on the signal of the MV grid (11).

5. The power supply system (10) of any one of the preceding claims,
further comprising a first inductor (20) arranged between the AC medium-voltage power signal (11) and the power feeding system (25), and arranged between the AC medium-voltage power signal (11) and the LV/MV multiphase transformer (50).

6. The power supply system (10) of any one of the preceding claims,
wherein the LV multiphase DC/AC-converter (40) comprises a multiphase switching subsystem (44) and a second inductor (46), which is arranged between the multiphase switching subsystem (44) and the LV/MV multiphase transformer (50).

7. The power supply system (10) of any one of the preceding claims,
further comprising a converter (30) that is configured for transforming the first low-voltage signal (68, 69) from the electricity consumer site (60), into the DC low-voltage signal (41, 42),
wherein the converter (30) is a DC/AC-converter, an AC/AC-converter, and/or an AC/DC-converter with a DC/AC-converter.

8. A method for supporting a bidirectional energy flow between a medium-voltage grid (11) and a low-voltage electricity consumer site (60), the method comprising the steps of:
transforming, by means of a power feeding system (25), an AC medium-voltage power signal (11) from the medium-voltage grid into a low-voltage power signal (29) for the electricity consumer site (60);
outputting, from the electricity consumer site (60), a first low-voltage signal (68, 69);
feeding a second low-voltage signal (41, 42), which is based on the first low-voltage signal (68, 69), into a low-voltage multiphase DC/AC-converter (40), which is arranged antiparallel to the power feeding system (25);
forwarding a low-voltage multiphase signal (49) from the output of the low-voltage multiphase DC/AC-converter (40) to an LV/MV multiphase transformer (50); and
transforming, by means of the LV/MV multiphase transformer (50), the low-voltage multiphase output signal (49) into an output-signal (59) that is conformant to the AC medium-voltage power signal (11).

9. The method of claim 7,
wherein the power feeding system (25) comprises a Line Interphase Transformer, LIT.

10. The method of claim 8,
wherein the LIT is a multi-pulse LIT with a pulse number of 12, of 18, of 24, or of higher than 24.

11. The method of any one of the claims 7 to 9, further comprising the step of:
filtering, by means of a first inductor (20), the AC medium-voltage power signal (11) from the power feeding system (25), and the AC medium-voltage power signal (11) from the LV/MV multiphase transformer (50).

12. A bidirectional power supply system (10) according to any one of the claims 1 to 6 for delivering energy from a medium-voltage grid to a low-voltage electricity consumer site (60) and from the low-voltage electricity consumer site (60) to the medium-voltage grid.

13. Use of a bidirectional power supply system (10) according to claim 11 for delivering energy from a medium-voltage grid to a low-voltage electricity consumer site (60) and from the low-voltage electricity consumer site (60) to the medium-voltage grid,
wherein the low-voltage electricity consumer site (60) is a charging box (60) and/or a charging pole for charging electric vehicles, a data-centre, and/or a plurality of low-voltage drives, and is configured to deliver energy from batteries, from a solar panel, and/or from other energy producing devices.
